# FASCICULE DE BREVET EUROPEEN

(11) **EP 3 924 237 B1**
(45) Date de publication et mention de la délivrance du brevet: **20.11.2024**
(21) Numéro de dépôt: 20705438.8
(22) Date de dépôt: 24.01.2020
(51) Int. Cl.: B60W 30/16, B60W 50/00

(54) **CONDUITE AUTONOME FONDÉE SUR UNE DISTANCE ET UNE VITESSE D'OBJETS CIBLES DISTINCTS**
AUTONOMES FAHREN BASIEREND AUF ABSTAND UND GESCHWINDIGKEIT BESTIMMTER ZIELOBJEKTE
AUTONOMOUS DRIVING BASED ON DISTANCE AND SPEED OF DISTINCT TARGET OBJECTS

(30) Priorité: 12.02.2019 FR 1901385
(43) Date de publication de la demande: 22.12.2021
(73) Titulaire: Stellantis Auto SAS, 78300 Poissy (FR)
(72) Inventeur: VIVET, Luc, 75016 PARIS 16 (FR)
(86) Numéro de dépôt international: PCT/FR2020/050109
(87) Numéro de publication internationale: WO 2020/165516

(56) Documents cités:
- EP-A1- 2 562 060
- DE-A1- 102007 057 722
- US-A1- 2014 257 665
- US-A1- 2014 330 479
- US-A1- 2017 106 861

## Description

La présente invention appartient au domaine du véhicule autonome. Elle concerne en particulier un procédé et un dispositif de conduite autonome d'un véhicule, appelé égo-véhicule, pour gérer la situation où deux objets cibles concernent l'égo-véhicule.

Elle est particulièrement avantageuse dans le cas d'un véhicule automobile dont la vitesse est régulée de manière adaptative en suivant les objets cibles.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

Dans la suite, le terme d' « égo-véhicule » est utilisé pour désigner le véhicule dont la conduite autonome est déterminé.

On entend par « route » tout moyen de communication impliquant un déplacement physique d'un véhicule. Une route nationale, départementale, locale, européenne, internationale, une autoroute nationale, européenne, internationale, un chemin forestier, un parcours pour dispositifs autonomes de rangement d'un entrepôt de stockage, etc. sont des exemples de routes.

La route comprend au moins une chaussée. On entend par « chaussée » tout moyen physique apte à supporter le déplacement d'un véhicule. Une autoroute comprend typiquement deux chaussées séparées par un terre-plein central.

La chaussée comprend au moins une voie. On entend par « voie » toute portion de chaussée affectée à une file de véhicule. Une chaussée d'une autoroute comprend typiquement au moins deux voies de circulation. Une voie d'insertion sur l'autoroute, une voie unique dans un tunnel, une voie de circulation à sens unique située dans une ville, etc. sont des exemples de voies.

Une voie peut être délimitée par des marquages au sol mais elle peut également correspondre à une trajectoire sur la chaussée empruntée par les véhicules circulant sur la chaussée. Une telle voie peut être appelée « voie virtuelle » car cette voie n'est pas délimitée par des marquages physiques mais est générée à partir de trajectoires passées empruntées par les véhicules circulant sur la chaussée.

Les véhicules sont fréquemment équipés de régulateurs de vitesse adaptatif. Un régulateur de vitesse adaptatif fonctionne en régulant la vitesse de l'égo-véhicule en fonction, notamment, de la vitesse d'un objet cible (principalement un véhicule cible) précédant l'égo-véhicule dans sa voie.

Un régulateur de vitesse adaptatif est aussi connu sous le nom d'ACC, pour Adaptative Cruise Control en anglais, la traduction française étant régulateur de vitesse adaptatif.

La sélection d'un objet cible pour la conduite autonome, par exemple pour la régulation de vitesse adaptative, est cruciale. Dans la pratique, les situations où plus d'un objet cible est détecté par l'égo-véhicule sont courantes.

Par exemple, lorsque l'égo-véhicule évolue sur la voie de droite sur une autoroute dans un pays où la conduite se fait à droite comportant deux chaussées séparées par un terre-plein central et comportant chacune deux voies (la voie de droite et la voie de gauche), il est possible que deux objets cibles, par exemple deux autres véhicules, circulent devant l'égo-véhicule.

On connait par le document US2014/330479 un raisonnement prédictif pour régulation de vitesse d'un véhicule. On connait par le document US2014/257665 un procédé de régulation de vitesse et/ou d'autonomie de véhicules automobiles. On connait par le document DE102007057722 un système de régulateur de vitesse adaptatif pour un véhicule et un procédé de mise en oeuvre du système. On connait par le document EP2562060 un véhicule et un procédé pour contrôler la distance entre les véhicules en déplacement.

Les méthodes actuelles de conduite autonome gèrent habituellement cette situation en prenant pour objet cible utilisé comme référence pour la régulation adaptative de vitesse, l'objet cible le plus proche de l'égo-véhicule. Avec cette méthode, l'objet cible est correctement détecté par les capteurs de l'égo-véhicule. Cependant, des déficiences de sécurité importantes sont présentes avec un telle méthode.

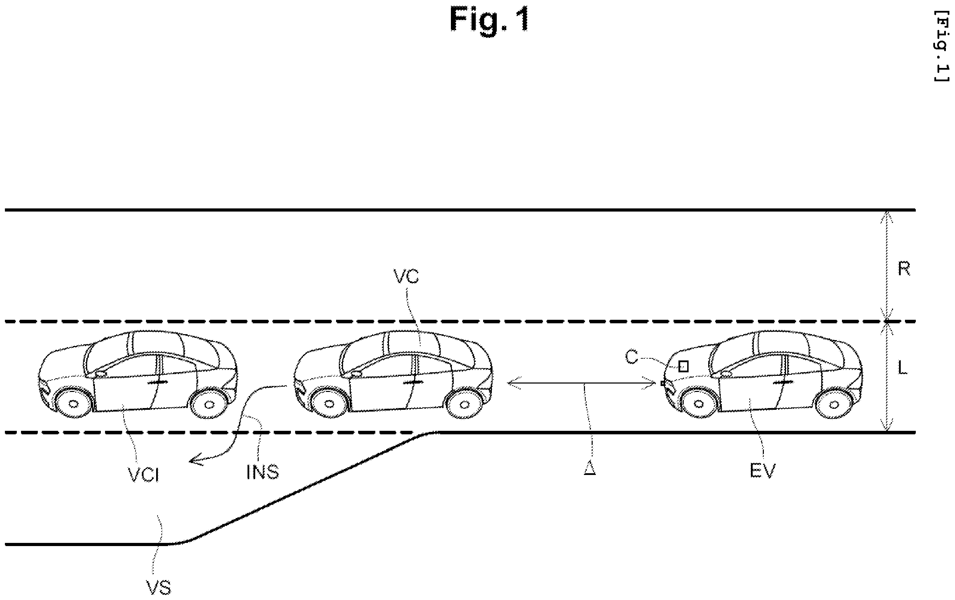

En effet, il est possible que l'objet le plus proche de l'égo-véhicule présente une conduite dangereuse, par exemple en se rapprochant très vite d'un deuxième objet cible ayant une vitesse plus faible. Cette situation est illustrée ci-après en référence à la figure 1.

Dans cette situation, prendre l'objet ayant la conduite dangereuse, ici appelé premier objet cible, comme référence pour la régulation adaptative de vitesse est très risqué. En effet, le premier objet cible peut déboiter très rapidement pour doubler dans une manoeuvre brutale le deuxième objet cible. Ceci n'est pas acceptable pour l'égo-véhicule, qui peut ne pas avoir les mêmes aptitudes de tenue de route, ou tout simplement parce que les passagers ne veulent pas subir une telle manoeuvre.

La présente invention vient améliorer la situation.

A cet effet, un premier aspect de l'invention concerne un procédé de conduite autonome d'un véhicule, appelé égo-véhicule, en présence d'au moins deux objets cibles, un premier objet cible un deuxième objet cible, selon la revendication 1.

Générer une instruction de conduite dans laquelle la vitesse de l'égo-véhicule est régulée sur la vitesse du deuxième objet cible tout en maintenant une distance cible entre l'égo-véhicule et le premier objet cible résout de manière simple et confortable pour les occupants de l'égo-véhicule les problèmes liés à une pluralité de véhicules roulant à des vitesses différentes devant l'égo-véhicule.

En effet, en régulant en vitesse sur le deuxième objet cible, si celui-ci a par exemple une vitesse largement inférieure à celle du premier objet cible, les risques liés à une manoeuvre d'évitement brutale de ce deuxième objet cible sont très réduits.

En outre, la distance entre égo-véhicule et premier objet cible est prise en compte, il reste donc possible d'éviter toute modification du comportement du premier objet cible et les occupants de l'égo-véhicule ne sont pas effrayés par une proximité trop importante avec ce premier objet cible.

On entend par « objet cible » tout objet présent dans un environnement de l'égo-véhicule. Par exemple, tout véhicule terrestre situé devant (en amont de la trajectoire de) l'égo-véhicule, tout type d'obstacle, une perturbation quelconque sur la chaussée, etc. sont des objets cibles.

Par ailleurs, il est ici fait mention de deux objets cibles, au moins. L'invention n'est bien sûr pas limitée à deux objets cible mais peut-être déclinée pour une infinité d'objets cibles. Ainsi, par exemple, pour trois objets cibles, et comme cela sera détaillé ci-après dans la description, la vitesse du premier objet cible est utilisée et des vitesses pondérées sont utilisées pour les deux autres objets cibles.

On entend par « des données » tout type d'information par exemple disponible sous forme numérique. L'utilisation de la forme plurielle pour « les données » ne signifie pas nécessairement que plusieurs données sont présentes, un bit pouvant par exemple être entendu comme « des données ».

Dans un mode de réalisation, la vitesse cible de l'égo-véhicule est longitudinale et correspond à une vitesse du deuxième objet cible.

Dans un mode de réalisation, le procédé comporte en outre une étape de détermination d'un type du premier objet cible et la distance cible est en outre déterminée à partir dudit type du premier objet cible. En pondérant la distance cible par le type du premier objet cible, la dynamique, notamment, des évolutions du premier objet cible est avantageusement prise en compte. Typiquement, un gros objet (camion par exemple) aura une inertie de mouvement plus importante qu'un petit objet (petit véhicule particulier par exemple).

Dans un mode de réalisation, le type du premier objet cible est déterminé à partir desdites données de mouvement du premier objet cible.

Selon l'invention le procédé comprend en outre une consolidation d'un indicateur de présence du premier objet cible et du deuxième objet cible et comprend les étapes de :
- obtention de données du capteur de l'égo-véhicule, lesdites données comprenant une information de présence du premier objet cible et une information de présence du deuxième objet cible;
- estimation d'une trajectoire de l'égo-véhicule ;
- calcul d'un indicateur instantané de présence du premier objet cible et d'un indicateur instantané du deuxième objet cible à partir desdites données du capteur et de ladite trajectoire de l'égo-véhicule estimée ;
- détermination d'un indicateur de présence consolidé du premier objet cible et d'un indicateur de présence consolidé du deuxième objet cible à partir des indicateurs instantanés de présence du premier objet cible et du deuxième objet cible et d'un historique d'indicateurs de présence consolidés du premier objet cible et du deuxième objet cible ;
- détermination d'un minimum entre l'indicateur de présence consolidé du premier objet cible et l'indicateur de présence consolidé du deuxième objet cible ;
et l'instruction de conduite autonome est en outre générée à partir dudit minimum.

Le traitement des données de capteur(s) est donc avantageusement adapté aux exigences fonctionnelles spécifiques de la conduite d'un véhicule autonome.

D'une part, l'indicateur de présence consolidé dépend de la trajectoire de l'égo-véhicule. Les fausses détections hors trajectoire sont donc filtrées. Dans un mode de réalisation, un tel filtrage est continu (prise en compte progressive en fonction de la proximité de la trajectoire) ou, dans un autre mode de réalisation, discret (binaire ; prise en compte ou non, ou par niveaux discrets ; nombre donné de niveaux de prise en compte).

D'autre part, l'indicateur de présence est consolidé par la prise en compte de l'historique des indicateurs consolidés précédents. Dès lors, toutes les fausses détection (faux positifs) sont lissées par l'historique. Par exemple, dans un mode de réalisation, l'apparition subite d'un objet à un instant donné sans que l'objet n'ait jamais été détecté précédemment est écartée pour la génération de l'instruction de conduite autonome.

Les effets techniques de filtrage des détections hors trajectoire et de filtrage des détections non précédemment détectées se combinent pour avoir pour, notamment, un effet synergique d'introduction d'une vérification de cohérence. En effet, seule une détection stable et sur la trajectoire de l'égo-véhicule garantie qu'une cible pertinente est présente. Ainsi, par exemple, toutes les situations où un véhicule se déporte légèrement et de manière périodique (typiquement pour laisser passer des deux roues circulant entre les voies) dans la voie de l'égo-véhicule sont filtrées.

Un deuxième effet synergique est lié à l'apparition d'erreurs de détection stables hors trajectoire. En effet, de nombreux capteurs en charge de la conduite autonome sont situés face à la route, vers l'avant. Ainsi, lors des situations de projections sur ces capteurs (pluie, neige, boues, humidités, etc.), les gouttes vont statistiquement se concentrer hors du champ des capteurs correspondant à la trajectoire. Par exemple, les gouttes se concentrent sur les côtés de l'objectif d'une caméra, le centre (éventuellement décentré pour des accélération latérales importantes) étant relativement préservé des gouttes par le vent apparent.

Dans un mode de réalisation, la distance entre le premier objet cible et l'égo-véhicule est inférieure à la distance entre le deuxième objet cible et l'égo-véhicule. Dans un autre mode de réalisation, le premier objet cible présente une durée avant collision avec l'égo-véhicule inférieure à une durée avant collision entre le deuxième objet cible et l'égo-véhicule. Dans un mode de réalisation, la vitesse longitudinale du deuxième objet cible est inférieure ou égale à la vitesse longitudinale du premier objet cible.

Dans un mode de réalisation, l'instruction de conduite autonome comprend une instruction de régulation adaptative de la vitesse de l'égo-véhicule, la régulation adaptative étant configurée pour prendre en compte un objet virtuel évoluant à une vitesse liée à la vitesse cible et/ou à une distance de l'égo-véhicule liée à la distance cible. Dans un mode de réalisation, liée signifie égal à. Dans un autre mode de réalisation, liée signifie proportionnellement relié à.

Un deuxième aspect de l'invention vise un programme informatique comportant des instructions pour la mise en oeuvre du procédé selon le premier aspect de l'invention, lorsque ces instructions sont exécutées par un processeur.

Un troisième aspect de l'invention vise un dispositif de conduite autonome d'un véhicule, appelé égo-véhicule, selon la revendication 8.

Un quatrième aspect de l'invention vise un véhicule comportant le dispositif selon le troisième aspect de l'invention.

D'autres caractéristiques et avantages de l'invention apparaîtront à l'examen de la description détaillée ci-après, et des dessins annexés sur lesquels :
[Fig.1] illustre un contexte d'application de l'invention ;
[Fig.2] illustre un procédé selon l'invention ;
[Fig.3] illustre un dispositif, selon un mode de réalisation de l'invention.

L'invention est décrite ci-après dans son application, non limitative, au cas d'un véhicule automobile autonome circulant sur une autoroute comportant deux chaussées séparées par un terre-plein central et comportant chacune deux voies. D'autres applications telles qu'un autobus sur une voie dédiée ou encore une motocyclette sur une route de campagne sont également envisageables.

La **figure** 1 illustre une chaussée d'autoroute comportant deux voies, une voie de gauche L et une voie de droite R présentant le même sens de circulation (du bas vers le haut de la figure). La voie gauche L comporte un égo-véhicule EV, un deuxième objet cible VCI et un premier objet cible VC. Ici, la distance entre le premier objet cible et l'égo-véhicule est inférieure à la distance entre le deuxième objet cible et l'égo-véhicule.

Toutefois, dans un autre mode de réalisation, pour déterminer le premier objet cible et le deuxième objet cible, la règle suivante est utilisée : le premier objet cible présente une durée avant collision avec l'égo-véhicule inférieure à une durée avant collision entre le deuxième objet cible et l'égo-véhicule. Une durée avant collision, « time-to-collision (TTC) » en anglais, est tout type de durée correspondant au temps, à un instant t, que mettrait égo-véhicule à percuter un objet cible si les données de mouvement de l'égo-véhicule et de l'objet cible restent celles présentent à l'instant t.

Dans un autre mode de réalisation, la vitesse longitudinale du deuxième objet cible est inférieure ou égale à la vitesse longitudinale du premier objet cible.

Le premier objet cible VC change de voie selon une manoeuvre INS. La nouvelle voie de VC est ici une sortie d'autoroute VS. Bien sûr d'autres voies finales pour VC peuvent être choisies, la voie la plus à droite sur l'autoroute, une voie de freinage d'urgence, etc.

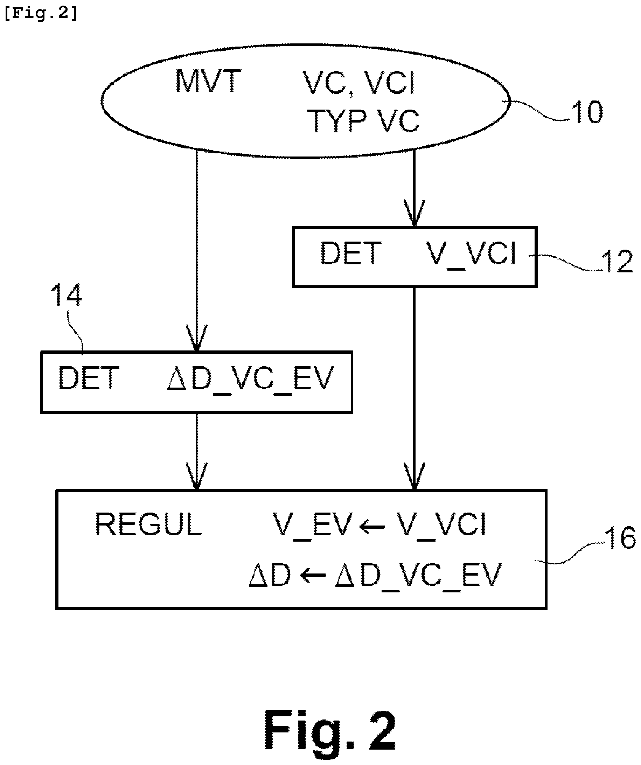

Pour illustrer la pertinence du procédé selon l'invention, décrit ci-après en détail en référence à la figure 2, il peut être considéré que le premier objet cible VC a une vitesse bien supérieure à celle du deuxième objet cible VCI et ne freine pas dans la perspective de sa sortie de l'autoroute via la sortie VS.

Une telle situation est relativement fréquente dans les environnements urbains, typiquement sur les périphériques de grandes agglomérations, ou de nombreux conducteurs ont une conduite agressive. Dans une telle situation, la régulation adaptative de vitesse de VE doit anticiper au mieux le deuxième objet cible VCI.

La **figure 2** illustre le procédé, selon un mode de réalisation de l'invention.

A une étape 10, un capteur C de l'égo-véhicule acquiert des données de mouvement du premier objet cible VC et des données de mouvement du deuxième objet cible VCI.

Le capteur C de l'égo-véhicule est l'un au moins des éléments parmi :
- un radar ;
- un lidar ;
- une caméra, par exemple une caméra vidéo multifonction, CVM ;
- un système de communication (par exemple Car2X ou 5G) configuré pour recevoir des informations d'au moins un autre véhicule, une infrastructure, un terminal utilisateur, etc. ;
- un laser ;
- etc.

Les données brutes acquises par le capteur C sont traitées et font l'objet d'une fusion lorsque plusieurs capteurs sont utilisés.

Il est ici confirmé que les capteurs de l'égo-véhicule EV peuvent bien, dans certaines situations, acquérir des données sur le deuxième objet cible VCI, même si celui-ci est partiellement masqué par le premier objet cible VC. Par exemple, les ondes émises par un radar passent sous le premier objet cible VC pour localiser le deuxième objet cible. Dans un autre exemple, les données de mouvement de VCI sont directement transmises par une communication 5G à l'égo-véhicule EV.

Dans un mode de réalisation comprenant un type, un type du premier objet cible VC est également acquis. Un type d'objet cible correspond à tout type de catégorie d'objet cible. Par exemple, un type d'objet cible correspond à une catégorie d'objet (véhicule particulier, camion, obstacle statique, animal, motocyclette, piéton, etc.), à une classification par importance (véhicule de sécurité, véhicule de personnalité, etc.), etc.

A une étape 12, une vitesse cible V_VCI de l'égo-véhicule à partir des données de mouvement du deuxième objet cible. Dans un mode de réalisation, la vitesse cible de l'égo-véhicule est longitudinale et correspond à une vitesse du deuxième objet cible.

A une étape 14, une distance cible ΔD_VC_EV entre l'égo-véhicule et le premier objet cible à partir des données de mouvement du premier objet cible. Dans le mode de réalisation comprenant le type, la distance cible est en outre déterminée à partir du type du premier objet cible.

A une étape 16, une instruction de conduite autonome de l'égo-véhicule est générée à partir de la vitesse cible V_VCI et de la distance cible ΔD_VC_EV. En particulier, dans un mode de réalisation, l'instruction de conduite autonome comprend une instruction de régulation adaptative de la vitesse de l'égo-véhicule, la régulation adaptative étant configurée pour prendre en compte un objet virtuel évoluant à une vitesse V_EV liée à la vitesse cible et/ou à une distance ΔD de l'égo-véhicule liée à la distance cible ΔD_VC_EV.

Selon l'invention le procédé comprend en outre une consolidation d'un indicateur de présence du premier objet cible et du deuxième objet cible et comprend les étapes de :
- obtention de données du capteur de l'égo-véhicule, lesdites données comprenant une information de présence du premier objet cible et une information de présence du deuxième objet cible. ;
- estimation d'une trajectoire de l'égo-véhicule. En particulier, la trajectoire de l'égo-véhicule peut être estimée à partir de données de mouvement de l'égo-véhicule, de données de position d'une route sur laquelle évolue ledit égo-véhicule et de données de position d'une voie comprise sur ladite route ;
- calcul d'un indicateur instantané de présence du premier objet cible et d'un indicateur instantané du deuxième objet cible à partir desdites données du capteur et de ladite trajectoire de l'égo-véhicule estimée ;
- détermination d'un indicateur de présence consolidé du premier objet cible et d'un indicateur de présence consolidé du deuxième objet cible à partir des indicateurs instantanés de présence du premier objet cible et du deuxième objet cible et d'un historique d'indicateurs de présence consolidés du premier objet cible et du deuxième objet cible. En particulier, l'indicateur de présence instantané est calculé à un instant donné (t), et dans lequel l'indicateur de présence consolidé est déterminé à partir de l'indicateur instantané de présence à l'instant donné et de l'historique d'indicateurs de présence consolidés comprenant au moins un indicateur de présence consolidé à un instant précédant (t-1) l'instant donné ;
- détermination d'un minimum entre l'indicateur de présence consolidé du premier objet cible et l'indicateur de présence consolidé du deuxième objet cible ;
et l'instruction de conduite autonome est en outre générée à partir dudit minimum.

On entend par « indicateur de présence » toute donnée caractéristique d'une présence d'un objet. En particulier, au moins une valeur numérique pour laquelle une valeur importante témoigne d'une forte probabilité de présence de l'objet et une valeur faible témoigne d'une faible probabilité de présence de l'objet est un exemple d'indicateur de présence.

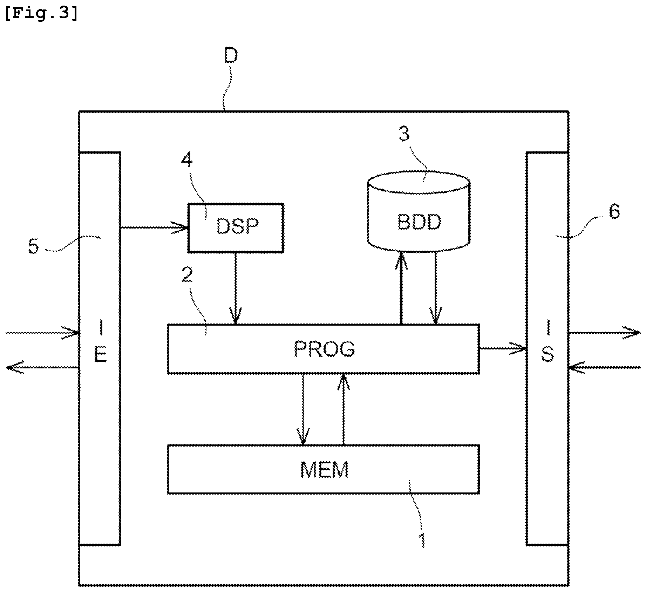

La **figure 3** représente un exemple de dispositif D compris dans l'égo-véhicule EV. Ce dispositif D peut être utilisé en tant que dispositif centralisé en charge d'au moins certaines étapes du procédé décrit ci-avant en référence à la figure 2.

Ce dispositif D peut prendre la forme d'un boitier comprenant des circuits imprimés, de tout type d'ordinateur ou encore d'un smartphone.

Le dispositif D comprend une mémoire vive 1 pour stocker des instructions pour la mise en oeuvre par un processeur 2 d'au moins une étape des procédés tels que décrits ci-avant. Le dispositif comporte aussi une mémoire de masse 3 pour le stockage de données destinées à être conservées après la mise en oeuvre du procédé.

Le dispositif D peut en outre comporter un processeur de signal numérique (DSP) 4. Ce DSP 4 reçoit des données pour mettre en forme, démoduler et amplifier, de façon connue en soi ces données.

Le dispositif comporte également une interface d'entrée 5 pour la réception des données mises en oeuvre par des procédés selon l'invention et une interface de sortie 6 pour la transmission des données mises en oeuvre par les procédés.

La présente invention ne se limite pas aux formes de réalisation décrites ci-avant à titre d'exemples ; elle s'étend à d'autres variantes selon les revendications annexées.

Ainsi, on a décrit ci-avant un exemple de réalisation dans lequel l'égo-véhicule évoluait sur une autoroute comporte deux chaussées de deux voies, les chaussées étant séparées par un terre-plein central. L'invention peut également être mise en oeuvre pour d'autres types de routes, tels que des routes nationales à chaussée unique comportant deux voies, des autoroutes à chaussées séparées, chaque chaussée comprenant 6 voies, etc.

De plus, on a décrit un mode de réalisation dans lequel l'invention était décrite dans le cadre de l'application à la régulation adaptative de vitesse.

En outre, les étapes décrites en référence à la figure 2 l'ont été dans un ordre précis. Un ordre différent est également envisageable. Par exemple, les étapes 12 et 14 peuvent être interverties ou encore effectuées simultanément.

## Revendications

1. Procédé de conduite autonome d'un véhicule, appelé égo-véhicule (EV), en présence d'au moins deux objets cibles, un premier objet cible un deuxième objet cible, le procédé comportant les étapes de :
- acquisition (10) par au moins un capteur de l'égo-véhicule de données de mouvement du premier objet cible ;
- acquisition (10) par au moins un capteur de l'égo-véhicule de données de mouvement du deuxième objet cible ;
- détermination d'une vitesse cible de l'égo-véhicule à partir des données de mouvement du deuxième objet cible ;
- détermination d'une distance cible entre l'égo-véhicule et le premier objet cible à partir des données de mouvement du premier objet cible ;
- consolidation d'un indicateur de présence du premier objet cible et du deuxième objet cible, **caractérise en ce que** le procédé comprend les étapes de :
▪ obtention de données du capteur de l'égo-véhicule, lesdites données comprenant une information de présence du premier objet cible et une information de présence du deuxième objet cible;
▪ estimation d'une trajectoire de l'égo-véhicule ;
▪ calcul d'un indicateur instantané de présence du premier objet cible et d'un indicateur instantané du deuxième objet cible à partir desdites données du capteur et de ladite trajectoire de l'égo-véhicule estimée ;
▪ détermination d'un indicateur de présence consolidé du premier objet cible et d'un indicateur de présence consolidé du deuxième objet cible à partir des indicateurs instantanés de présence du premier objet cible et du deuxième objet cible et d'un historique d'indicateurs de présence consolidés du premier objet cible et du deuxième objet cible ;
▪ détermination d'un minimum entre l'indicateur de présence consolidé du premier objet cible et l'indicateur de présence consolidé du deuxième objet cible ;
- génération d'une instruction de conduite autonome de l'égo-véhicule à partir de la vitesse cible, de la distance cible, et dudit minimum.

2. Procédé selon la revendication 1, dans lequel la vitesse cible de l'égo-véhicule est longitudinale et correspond à une vitesse du deuxième objet cible.

3. Procédé selon l'une des revendications précédentes, comportant en outre une étape de :
- détermination d'un type du premier objet cible ;
et dans lequel la distance cible est en outre déterminée à partir dudit type du premier objet cible.

4. Procédé selon la revendication 3, dans lequel le type du premier objet cible est déterminé à partir desdites données de mouvement du premier objet cible.

5. Procédé selon la revendication 1, dans lequel la distance entre le premier objet cible et l'égo-véhicule est inférieure à la distance entre le deuxième objet cible et l'égo-véhicule.

6. Procédé selon la revendication 1, dans lequel le premier objet cible présente une durée avant collision avec l'égo-véhicule inférieure à une durée avant collision entre le deuxième objet cible et l'égo-véhicule.

7. Programme informatique comportant des instructions pour la mise en oeuvre du procédé selon l'une quelconque des revendications précédentes, lorsque ces instructions sont exécutées par un processeur (2).

8. Dispositif (D) de conduite autonome d'un véhicule, appelé égo-véhicule (EV), en présence d'au moins deux objets cibles, un premier objet cible un deuxième objet cible, le dispositif comportant :
- au moins un capteur (C) configuré pour l'acquisition de données de mouvement du premier objet cible et de données de mouvement du deuxième objet cible ;
- au moins un processeur (2) et au moins une mémoire (1, 3) agencés pour effectuer les opérations de :
∘ détermination d'une vitesse cible de l'égo-véhicule à partir des données de mouvement du deuxième objet cible ;
∘ détermination d'une distance cible entre l'égo-véhicule et le premier objet cible à partir des données de mouvement du premier objet cible ;
∘ consolidation d'un indicateur de présence du premier objet cible et du deuxième objet cible, comprenant les étapes de :
▪ obtention de données du capteur de l'égo-véhicule, lesdites données comprenant une information de présence du premier objet cible et une information de présence du deuxième objet cible;
▪ estimation d'une trajectoire de l'égo-véhicule ;
▪ calcul d'un indicateur instantané de présence du premier objet cible et d'un indicateur instantané du deuxième objet cible à partir desdites données du capteur et de ladite trajectoire de l'égo-véhicule estimée ;
▪ détermination d'un indicateur de présence consolidé du premier objet cible et d'un indicateur de présence consolidé du deuxième objet cible à partir des indicateurs instantanés de présence du premier objet cible et du deuxième objet cible et d'un historique d'indicateurs de présence consolidés du premier objet cible et du deuxième objet cible ;
▪ détermination d'un minimum entre l'indicateur de présence consolidé du premier objet cible et l'indicateur de présence consolidé du deuxième objet cible ;
∘ génération d'une instruction de conduite autonome de l'égo-véhicule à partir de la vitesse cible, de la distance cible, et dudit minimum.

9. Véhicule (EV) comportant le dispositif selon la revendication 8.

## Patentansprüche

1. Verfahren zum autonomen Fahren eines Fahrzeugs, genannt Ego-Fahrzeug (EV), bei Anwesenheit von mindestens zwei Zielobjekten, wobei ein erstes Objekt ein zweites Zielobjekt anvisiert, wobei das Verfahren die Schritte umfasst:
- Erfassung (10) von Bewegungsdaten des ersten Zielobjekts durch mindestens einen Sensor des Ego-Fahrzeugs;
- Erfassen (10) von Bewegungsdaten des zweiten Zielobjekts durch mindestens einen Sensor des Ego-Fahrzeugs;
- Ermitteln einer Zielgeschwindigkeit des Ego-Fahrzeugs aus den Bewegungsdaten des zweiten Zielobjekts;
- Ermitteln einer Zielentfernung zwischen dem Ego-Fahrzeug und dem ersten Zielobjekt aus den Bewegungsdaten des ersten Zielobjekts;
- Konsolidierung eines Indikators für die Anwesenheit des ersten Zielobjekts und des zweiten Zielobjekts, **dadurch gekennzeichnet, dass** das Verfahren die Schritte umfasst:
• Erhalten von Daten vom Sensor des Ego-Fahrzeugs, wobei diese Daten Informationen über die Anwesenheit des ersten Zielobjekts und Informationen über die Anwesenheit des zweiten Zielobjekts umfassen;
• Schätzung einer Flugbahn des Ego-Fahrzeugs;
• Berechnung eines momentanen Indikators für die Anwesenheit des ersten Zielobjekts und eines momentanen Indikators für das zweite Zielobjekt aus den Sensordaten und der geschätzten Flugbahn des Ego-Fahrzeugs;
• Bestimmung eines konsolidierten Anwesenheitsindikators des ersten Zielobjekts und eines konsolidierten Anwesenheitsindikators des zweiten Zielobjekts aus den momentanen Indikatoren der Anwesenheit des ersten Zielobjekts und des zweiten Zielobjekts und einer Historie von Indikatoren der konsolidierten Anwesenheit des ersten Ziels Objekt und das zweite Zielobjekt;
• Bestimmung eines Minimums zwischen dem konsolidierten Präsenzindikator des ersten Zielobjekts und dem konsolidierten Präsenzindikator des zweiten Zielobjekts;
- Generierung einer autonomen Fahranweisung für das Ego-Fahrzeug aus der Zielgeschwindigkeit, der Zielentfernung und diesem Minimum.

2. Verfahren nach Anspruch 1, bei dem die Zielgeschwindigkeit des Ego-Fahrzeugs longitudinal ist und einer Geschwindigkeit des zweiten Zielobjekts entspricht.

3. Verfahren nach einem der vorhergehenden Ansprüche, weiterhin umfassend einen Schritt:
- Bestimmung eines Typs des ersten Zielobjekts;
und wobei die Zielentfernung weiterhin aus der Art des ersten Zielobjekts bestimmt wird.

4. Verfahren nach Anspruch 3, wobei die Art des ersten Zielobjekts aus den Bewegungsdaten des ersten Zielobjekts ermittelt wird.

5. Verfahren nach Anspruch 1, wobei der Abstand zwischen dem ersten Zielobjekt und dem Ego-Fahrzeug geringer ist als der Abstand zwischen dem zweiten Zielobjekt und dem Ego-Fahrzeug.

6. Verfahren nach Anspruch 1, wobei das erste Zielobjekt eine Dauer vor der Kollision mit dem Ego-Fahrzeug aufweist, die kleiner ist als eine Dauer vor der Kollision zwischen dem zweiten Zielobjekt und dem Ego-Fahrzeug.

7. Computerprogramm mit Anweisungen zur Durchführung des Verfahrens nach einem der vorhergehenden Ansprüche, wenn diese Anweisungen von einem Prozessor (2) ausgeführt werden.

8. Vorrichtung (D) zum autonomen Fahren eines Fahrzeugs, genannt Ego-Fahrzeug (EV), bei Anwesenheit von mindestens zwei Zielobjekten, einem ersten Zielobjekt und einem zweiten Zielobjekt, wobei die Vorrichtung umfasst:
- mindestens einen Sensor (C), der zum Erfassen von Bewegungsdaten des ersten Zielobjekts und Bewegungsdaten des zweiten Zielobjekts konfiguriert ist;
- mindestens einen Prozessor (2) und mindestens einen Speicher (1, 3), die so angeordnet sind, dass sie die folgenden Operationen ausführen:
∘ Ermittlung einer Zielgeschwindigkeit des Ego-Fahrzeugs aus den Bewegungsdaten des zweiten Zielobjekts;
∘ Ermittlung einer Zielentfernung zwischen dem Ego-Fahrzeug und dem ersten Zielobjekt aus den Bewegungsdaten des ersten Zielobjekts;
∘ Konsolidierung eines Anwesenheitsindikators des ersten Zielobjekts und des zweiten Zielobjekts, umfassend die Schritte:
• Erhalten von Daten vom Sensor des Ego-Fahrzeugs, wobei diese Daten Informationen über die Anwesenheit des ersten Zielobjekts und Informationen über die Anwesenheit des zweiten Zielobjekts umfassen;
• Schätzung einer Flugbahn des Ego-Fahrzeugs;
• Berechnung eines momentanen Indikators für die Anwesenheit des ersten Zielobjekts und eines momentanen Indikators für das zweite Zielobjekt aus den Sensordaten und der geschätzten Flugbahn des Ego-Fahrzeugs;
• Bestimmung eines konsolidierten Anwesenheitsindikators des ersten Zielobjekts und eines konsolidierten Anwesenheitsindikators des zweiten Zielobjekts aus den momentanen Indikatoren der Anwesenheit des ersten Zielobjekts und des zweiten Zielobjekts und einer Historie von Indikatoren der konsolidierten Anwesenheit des ersten Ziels Objekt und das zweite Zielobjekt;
• Bestimmung eines Minimums zwischen dem konsolidierten Präsenzindikator des ersten Zielobjekts und dem konsolidierten Präsenzindikator des zweiten Zielobjekts;
∘ Generierung einer autonomen Fahranweisung für das Ego-Fahrzeug basierend auf der Zielgeschwindigkeit, der Zielentfernung und dem genannten Minimum.

9. Fahrzeug (EV), umfassend die Vorrichtung nach Anspruch 8.

## Claims

1. Method for autonomous driving of a vehicle, called an ego-vehicle (EV), in the presence of at least two target objects, a first target object and a second target object, the method comprising the steps of:
- acquisition (10) by at least one sensor of the ego-vehicle of movement data of the first target object;
- acquisition (10) by at least one sensor of the ego-vehicle of movement data of the second target object;
- determination of a target speed of the ego-vehicle from the movement data of the second target object;
- determination of a target distance between the ego-vehicle and the first target object from the movement data of the first target object;
- consolidation of an indicator of presence of the first target object and of the second target object, **characterized in that** the method comprises the steps of:
• obtaining data from the sensor of the ego-vehicle, said data comprising information on the presence of the first target object and information on the presence of the second target object;
• estimation of a trajectory of the ego-vehicle;
• calculation of an instantaneous indicator of presence of the first target object and an instantaneous indicator of the second target object from said sensor data and said estimated trajectory of the ego-vehicle;
• determination of a consolidated indicator of presence of the first target object and a consolidated indicator of presence of the second target object from the instantaneous indicators of presence of the first target object and the second target object and a history of consolidated indicators of presence of the first target object and the second target object;
• determination of a minimum between the consolidated indicator of presence of the first target object and the consolidated indicator of presence of the second target object;
- generation of an autonomous driving instruction of the ego-vehicle from the target speed, the target distance, and said minimum.

2. The method according to claim 1, wherein the target speed of the ego-vehicle is longitudinal and corresponds to a speed of the second target object.

3. Method according to one of the preceding claims, further comprising a step of:
- determining a type of the first target object;
and wherein the target distance is further determined from said type of the first target object.

4. Method according to claim 3, wherein the type of the first target object is determined from said motion data of the first target object.

5. Method according to claim 1, wherein the distance between the first target object and the ego-vehicle is less than the distance between the second target object and the ego-vehicle.

6. Method according to claim 1, wherein the first target object has a time before collision with the ego-vehicle less than a time before collision between the second target object and the ego-vehicle.

7. Computer program comprising instructions for implementing the method according to any one of the preceding claims, when these instructions are executed by a processor (2).

8. Device (D) for autonomous driving of a vehicle, called an ego-vehicle (EV), in the presence of at least two target objects, a first target object and a second target object, the device comprising:
- at least one sensor (C) configured for acquiring movement data of the first target object and movement data of the second target object;
- at least one processor (2) and at least one memory (1, 3) arranged to perform the operations of:
∘ determining a target speed of the ego-vehicle from the movement data of the second target object;
∘ determining a target distance between the ego-vehicle and the first target object from the movement data of the first target object;
∘ consolidation of a presence indicator of the first target object and of the second target object, comprising the steps of:
• obtaining data from the sensor of the ego-vehicle, said data comprising information on the presence of the first target object and information on the presence of the second target object;
• estimating a trajectory of the ego-vehicle;
• calculating an instantaneous indicator of the presence of the first target object and an instantaneous indicator of the second target object from said sensor data and said estimated trajectory of the ego-vehicle;
• determining a consolidated presence indicator of the first target object and a consolidated presence indicator of the second target object from the instantaneous indicators of the presence of the first target object and of the second target object and from a history of consolidated presence indicators of the first target object and of the second target object;
• determining a minimum between the consolidated presence indicator of the first target object and the consolidated presence indicator of the second target object;
∘ generation of an autonomous driving instruction of the ego-vehicle from the target speed, the target distance, and said minimum.

9. Vehicle (EV) comprising the device according to claim 8.
